# EUROPÄISCHE PATENTANMELDUNG

(11) **EP 3 832 453 A1**
(43) Veröffentlichungstag der Anmeldung: **09.06.2021**
(21) Anmeldenummer: 19213961.6
(22) Anmeldetag: 05.12.2019
(51) Int. Cl.: G06F 7/02, G05B 19/042, G06F 7/483

(54) **VERFAHREN ZUR DURCHFÜHRUNG EINER GLEITKOMMAARITHMETIK**

(71) Anmelder: Wieland Electric GmbH, 96052 Bamberg (DE)
(72) Erfinder: Hünerson, Dirk, 14548 Schwielowsee (DE)
(74) Vertreter: 2K Patentanwälte Blasberg Kewitz & Reichel

(57) **Zusammenfassung**

Ein Verfahren zur Durchführung einer Gleitkommaarithmetik während der Laufzeit eines Programms in Echtzeit, bei dem aus zwei Ausgangsdaten, bei denen es sich um Gleitkommazahlen handelt, in einer ersten Berechnung ein erstes Ergebnis ermittelt wird, in einer zweiten, zur ersten Berechnung analogen Berechnung ein zweites Ergebnis ermittelt wird, wobei das erste und das zweite Ergebnis auf eine Fehlerabweichung überprüft werden, soll eine im Sinne der IEC 61508 sichere Gleitkommaarithmetik mit vergleichsweise einfachen Mitteln ermöglichen. Dazu wird die erste Berechnung mittels einer Software-Bibliothek für Gleitkommaberechnungen durchgeführt, und die zweite Berechnung mittels einer Gleitkomma-Hardwareeinheit (114) durchgeführt.

## Beschreibung

Die Erfindung betrifft ein Verfahren zur Durchführung einer Gleitkommaarithmetik während der Laufzeit eines Programms in Echtzeit, bei dem aus zwei Ausgangsdaten, bei denen es sich um Gleitkommazahlen handelt, in einer ersten Berechnung ein erstes Ergebnis ermittelt wird, in einer zweiten, zur ersten Berechnung analogen Berechnung ein zweites Ergebnis ermittelt wird, wobei das erste und das zweite Ergebnis auf eine Fehlerabweichung überprüft werden. Sie betrifft weiter ein 6. Verarbeitungsgerät, ausgebildet zur Durchführung einer Gleitkommaarithmetik während der Laufzeit eines Programms in Echtzeit.

In der industriellen Automatisierung werden häufig fehlersichere Steuerungen (Sicherheitssteuerungen) verwendet, um elektrische Verbraucher sicher ein- und auszuschalten, die Gefahrenpotential für Mensch und Material bergen. Derartige elektrische Verbraucher sind z.B. Pressen, Fräswerkzeuge, Brenner etc. Hierzu wird die Stromversorgung für den elektrischen Verbraucher über Schaltausgänge der Sicherheitssteuerung gesteuert, die zur Erfüllung der einschlägigen Sicherheitsvorschriften und -zertifizierungen hinsichtlich der funktionalen Sicherheit ausgelegt sind (EN ISO 13849, EN/IEC 61508, EN/IEC 61511, EN/IEC 62061 etc.). Dazu sind die internen Schaltkreise typischerweise nach dem Prinzip der überwachten Redundanz aufgebaut, deren Definition nach der IEC 61508 durch Verweis in diese Beschreibung mit aufgenommen wird.

Sicherheitssteuerungen weisen üblicherweise eine Anzahl von Schalteingängen und -ausgängen zum Anschluss der Arbeitskontakte eines Sicherheitsschaltelements auf. Das Sicherheitsschaltelement kann z.B. ein Not-Aus-Schalter sein, eine Positions- oder Stellungsüberwachung z.B. einer Schutztür, eine Lichtschranke, eine Schaltmatte etc. Das Sicherheitsschaltelement hat dabei üblicherweise eine je nach Anwendung zu bestimmende Stellung "sicher", z.B. Lichtschranke nicht unterbrochen, d.h. keine Person im Gefahrenbereich, und eine Stellung "nicht sicher", z.B. Schutztürposition offen, d.h. Gefahr. Typischerweise soll die Stromzufuhr zu dem elektrischen Verbraucher dann unterbrochen werden, wenn das Sicherheitsschaltelement nicht mehr in der Position "sicher" ist.

Sicherheitssteuerungen sind häufig auch modular aufgebaut, so dass mehrere, unterschiedlich geartete Sicherheitsschaltelemente angeschlossen werden können. Weiterhin können so auch mehrere elektrische Verbraucher gezielt angesteuert werden. Bei derartigen größeren Sicherheitssteuerungen, seien sie nun modular oder nichtmodular aufgebaut, ist eine Programmierung allein anhand von manuellen Einstellschaltern nicht mehr praktikabel. Daher wird hier häufig auf eine Programmierung auf einem digitalen Computer zurückgegriffen, wie sie beispielsweise auch aus dem Bereich der Speicherprogrammierbaren Steuerungen (SPS) bekannt ist.

Da die Signalein- und Ausgänge typischerweise mit logischen/binären Signalen beschaltet sind (z.B. +24 V = logisch 1 / 0 V = logisch 0), stellt die Programmieroberfläche dabei logische Funktionsbausteine zur Verfügung, so z.B. einfache Bausteine wie "UND" oder "ODER", die aus zwei oder mehr binären Eingangswerten einen einzelnen Ausgangswert erzeugen, oder aber Funktionsbausteine mit hinterlegten Parameterwerten, die ein Eingangssignal anhand des jeweiligen Parameterwerts modifizieren oder auch ein vorbestimmtes Ausgangssignal anhand des Parameterwerts erzeugen.

Nicht alle sicherheitsrelevanten Zustände eines Systems lassen sich jedoch in digitalen Eingangssignalen abbilden. Oft ist die Sicherheit eines Prozesses abhängig von bestimmten Parametern wie Temperatur, Dichte etc. innerhalb des Systems. Damit entsprechende Signale innerhalb einer Sicherheitssteuerung verwertet werden können, sind dafür entweder zusätzliche Geräte zur Vorverarbeitung vonnöten, was jedoch eine höhere Komplexität hinsichtlich der Hardware bedeutet, oder die Sicherheitssteuerung muss durch entsprechende Module o.ä. mit Analogsignal-Schalteingängen ausgestattet werden, die analoge Signale, d.h. in der Regel Strom- oder Spannungswerte einlesen können.

Auch für die Verarbeitung solcher Signale durch die Soft- und Hardware sind bei fehlersicheren Steuerungen die beschriebenen Standards der o.g. Normen, insbesondere auch das Prinzip der überwachten Redundanz zu beachten. Aus der DE 102 19 501 B4 ist ein Verfahren bekannt, welches rein softwarebasiert realisiert ist und eine Absicherung mittels arithmetischer Codes vorschlägt. Derartige Verfahren sind jedoch nur auf Boolsche und Integer-Datentypen anwendbar. Für die Verarbeitung analoger Signale sind hingegen Gleitkommaberechnungen notwendig.

Die EP 2 441 003 B1 stellt ein Softwareverfahren mittels Gleitkommazahlen vor, das die Rundungsproblematik während der Laufzeit durch in Gleitkomma-Intervalldarstellung umgewandelte Daten beherrscht. Dieses Verfahren stellt zwar eine Möglichkeit der Absicherung von Gleitkomma-Berechnungen dar, welches auch in bei einkanaliger Hardware anwendbar ist (bei dem also hardwareseitig keine überwachte Redundanz vorliegt), es ist jedoch vergleichsweise komplex und erfordert eine aufwändige Berechnung, Implementierung, Testung bzw. Validierung.

Vor diesem Hintergrund ist es Aufgabe der Erfindung, ein Verfahren der eingangs genannten Art anzugeben, durch welches eine im Sinne der IEC 61508 sichere Gleitkommaarithmetik mit vergleichsweise einfachen Mitteln ermöglicht wird.

Diese Aufgabe wird bezüglich des Verfahrens erfindungsgemäß dadurch gelöst, dass die erste Berechnung mittels einer Software-Bibliothek für Gleitkommaberechnungen durchgeführt wird, und die zweite Berechnung mittels einer Gleitkomma-Hardwareeinheit durchgeführt wird.

Bezüglich des Verarbeitungsgeräts wird die Aufgabe gelöst indem dieses eine Prozessoreinheit und eine Gleitkomma-Hardwareeinheit umfasst, wobei das Verarbeitungsgerät dazu ausgebildet ist, aus zwei Ausgangsdaten, bei denen es sich um Gleitkommazahlen handelt, in einer ersten Berechnung mittels einer Software-Bibliothek für Gleitkommaberechnungen in der Prozessoreinheit ein erstes Ergebnis zu ermitteln, in einer zweiten, zur ersten Berechnung analogen Berechnung in der Gleitkomma-Hardwareeinheit ein zweites Ergebnis zu ermitteln, und das erste und das zweite Ergebnis auf eine Fehlerabweichung zu überprüfen.

Die Erfindung geht dabei von der Überlegung aus, dass eine redundant überwachte Gleitkommaberechnung im Rahmen der funktionalen Sicherheit nach IEC 61508 bislang entweder darauf beruhte, direkt auf der Hardwareebene anzusetzen und bereits die Eingangsdaten redundant zu erfassen und parallel und gegenseitig überwacht auszuwerten, oder aber - bei Hardware-Einkanaligkeit - komplexe, rein softwarebasierte Methoden einzusetzen. Hierbei wurde erkannt, dass eine Redundanz im Rahmen einer Verarbeitung analoger Daten auch und sogar mit zusätzlichen vorteilhaften Wirkungen durch technisch realisierte Diversität zu erreichen ist. Diese Diversität wird durch eine einerseits softwarebasierte und andererseits hardwarebasierte Berechnung und anschließende Konsolidierung dargestellt. Dies ist erreichbar, indem die Berechnung parallel durch Gleitkomma-Softwarebibliotheken und einen entsprechenden Hardwarebaustein, d.h. eine FPU (Floating Point Unit) durchgeführt wird. Hierdurch wird die gewünschte Redundanz erreicht, ohne dass auf Hardware- oder Softwareebene komplexe Anordnungen oder Rechenverfahren verwendet werden müssten.

Beim dem Verfahren werden vorteilhafterweise das erste und das zweite Ergebnis vor der Überprüfung auf eine Fehlerabweichung in Integerwerte umgewandelt und die Überprüfung erfolgt anhand der Integerwerte. Besonders vorteilhaft wird hierbei ein erwarteter Fehler und/oder eine erforderte Genauigkeit vorgegeben und die Umwandlung in Integerwerte erfolgt anhand des vorgegebenen erwarteten Fehlers und/oder der vorgegebenen erforderten Genauigkeit.

Entsprechend ist das Verarbeitungsgerät vorteilhafterweise dazu ausgebildet, das erste und das zweite Ergebnis vor der Überprüfung auf eine Fehlerabweichung in Integerwerte umzuwandeln und die Überprüfung anhand der Integerwerte erfolgen zu lassen. Besonders vorteilhaft ist es dabei dazu ausgebildet, die Umwandlung in Integerwerte anhand eines vorgegebenen erwarteten Fehlers und/oder einer vorgegebenen erforderten Genauigkeit erfolgen zu lassen.

Ein Vergleich der software- und hardwareseitig ermittelten Ergebnisse auf Basis eine Umwandlung in ganzzahlige, d.h. Integerwerte trägt dem Umstand Rechnung, dass je nach verwendeter Hardware und Software ohnehin nur eine bestimmte Genauigkeit erreichbar ist. Alternativ kann auch nur eine bestimmte Genauigkeit gewünscht oder für den jeweiligen Einsatzzweck benötigt werden. Auf der Basis dieser gewünschten oder benötigten Genauigkeit wird der Gleitkommawert in einen Integerwert gewandelt, d.h. das Komma entsprechend verschoben und die Nachkommastellen abgeschnitten. Der Abgleich, d.h. die Konsolidierung gemäß IEC 61508 erfolgt dann auf Basis der so erhaltenen Integerwerte. Dies ist insbesondere von Vorteil, da die verarbeitende und vergleichende Hauptprozessoreinheit in der Regel für die Ganzzahlverarbeitung ausgelegt ist.

In vorteilhafter Ausgestaltung des Verfahrens wird dieses innerhalb eines nach IEC 61508 sicheren Verarbeitungsgeräts ausgeführt bzw. das Verarbeitungsgerät ist vorteilhafterweise nach IEC 61508 sicher ausgebildet. Wie beschrieben entfaltet das beschriebene Verfahren in einem derartigen Gerät besonders die beschriebenen Vorteile.

Von besonderem Vorteil ist das Verfahren, wenn es vorteilhafterweise innerhalb eines Verfahrens zur sicheren Bestimmung von Analogsignalen angewendet wird. Entsprechend weist das Verarbeitungsgerät vorteilhafterweise eine Eingangsklemme für Analogsignale auf.

Auch wenn das Verfahren für die sichere Verarbeitung jeglicher Gleitkommawerte anwendbar ist, so ist eine solche sichere Gleitkommaarithmetik grade bei der Verarbeitung von Analogsignalen wie z.B. Temperatursensoren sinnvoll und notwendig. In diesem Fall ist bei dem Verarbeitungsgerät vorteilhafterweise die Eingangsklemme als Quelle für eine der Ausgangsdaten vorgesehen, d.h. z.B. eine gemessene Spannung stellt den ersten Ausgangswert der Ausgangsdaten als Gleitkommawert zur Verfügung.

Die mit der Erfindung erzielten Vorteile bestehen insbesondere darin, dass durch die Realisierung einer hardware-einkanaligen Diversität im Rahmen einer fehlersicheren Gleitkommaarithmetik durch parallele software-und hardwarebasierte Berechnung eine Fehlersicherheit der Gleitkommaberechnung gemäß IEC 61508 realisiert werden kann, ohne dass hardwareseitig oder softwareseitig besonders komplexe Anordnungen oder Verfahren erforderlich werden. Aufwändige statische und Laufzeittests und eine Validierung entweder der arithmetischen Software-Bibliothek bzw. einer komplexen Hardware-Funktion können entfallen.

Zudem weist die vorgeschlagene diversitäre Redundanz zusätzliche Vorteile gegenüber bisher bekannten Verfahren auf, da sie die Erkennung zusätzlicher Fehler erlauben: Bisher verwendete Verfahren und Systeme arbeiteten mit homogener Redundanz, bei der gleiche Komponenten parallel arbeiten. Da die Komponenten identisch sind, sichert eine derartige Auslegung aber nur gegen zufällige Ausfälle z.B. aufgrund Alterung, Verschleiß oder Bitfehlern. Die nun vorgeschlagene parallele Software- und Hardware-Verarbeitung reduziert jedoch auch die Wahrscheinlichkeit für einen Gesamtausfall aufgrund systematischer Fehler (z.B. Konstruktionsfehler), da unterschiedliche Komponenten parallel arbeiten, die unterschiedliche Konstruktionsprinzipien aufweisen.

Ausführungsbeispiele der Erfindung werden anhand von Zeichnungen näher erläutert. Darin zeigen:
- FIG 1: eine schematische Darstellung einer modularen Sicherheitssteuerung,
- FIG 2: eine schematische Darstellung der modularen Sicherheitssteuerung in einer Betriebsart mit einem redundanten Schalter,
- FIG 3: eine schematische Darstellung der Sicherheitssteuerung mit einem zur Programmierung ausgerüsteten digitalen Computer,
- FIG 4: eine schematische Darstellung eines Analogmoduls für die modulare Sicherheitssteuerung Signaleingängen für Analogsignale, und

Gleiche Teile sind in allen Zeichnungen mit denselben Bezugszeichen versehen.

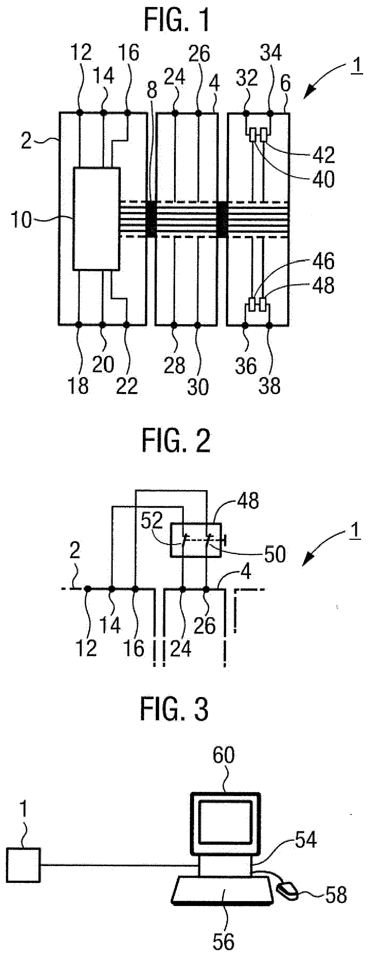

Die FIG 1 zeigt schematisch ein Verarbeitungsgerät 1 in Form einer modularen Sicherheitssteuerung, umfassend ein Kopfmodul 2, ein Eingangserweiterungsmodul 4 und ein Ausgangserweiterungsmodul 6, die über einen Rückwandbus 8 datenseitig miteinander verbunden sind. Im Kopfmodul 2 ist eine zentrale Steuereinheit 10 angeordnet, die die Eingangssignale verarbeitet und daraus Ausgangssignale erzeugt. Die Sicherheitssteuerung 1 ist eine speicherprogrammierbare Steuerung, die zusätzlich gemäß der Norm IEC 61508 ausgestaltet, d.h. funktional sicher ist. Dies wird neben anderen Maßnahmen durch die sogenannte überwachte Redundanz gewährleistet, d.h. die Steuereinheit 2 umfasst zwei nicht näher gezeigte, redundant arbeitende Mikrocontroller, deren Ergebnisse permanent abgeglichen und auf Übereinstimmung geprüft werden.

Die Sicherheitssteuerung 1 weist eine Vielzahl von Klemmen 12 - 38 auf, von denen sechs Klemmen 12 - 22 am Kopfmodul 2, vier Klemmen 24 - 30 am Eingangserweiterungsmodul 4 und vier Klemmen 32 - 38 am Ausgangserweiterungsmodul 6 angeordnet sind. Die Steuereinheit 10 kann über den Rückwandbus 8 und ggf. weitere Prozessoreinheiten in den Erweiterungsmodulen 4, 6 jede der Klemmen 12 - 38 ansteuern bzw. abrufen.

Die Klemmen 32 - 38 des Ausgangserweiterungsmoduls 6 können paarweise in die Stromzufuhr zu einem nicht näher gezeigten Aktor geschaltet werden, der einen elektrischen Verbraucher schaltet, der Gefahrenpotential aufweist und daher sicher ausgeschaltet werden soll. Dazu sind in die Verbindung zwischen den Klemmen 32, 34 bzw. 36, 38 jeweils zwei Relais 40, 42 bzw. 44, 46 in Reihe geschaltet. Um den Stromfluss zu erhalten, müssen beide Relais 40, 42 bzw. 44, 46 im geschlossenen Zustand sein, sie sind also redundant. Die Relais 40, 42 bzw. 44, 46 werden von den redundanten Mikrocontrollern der Steuereinheit 10 unabhängig gesteuert. Um die Funktion des elektrischen Verbrauchers im Gefahrenfall zu unterbrechen oder zumindest zu beeinflussen, sind verschiedene, beispielhaft in der folgenden FIG 2, jedoch nicht in der FIG 1 gezeigte Geber an die Sicherheitssteuerung 1 anschließbar. Diese können z.B. Not-Aus-Schalter, Lichtschranken, Türpositionsschalter etc. sein. Zum Anschluss dieser Geber weist die Sicherheitssteuerung 1 neben den Klemmen 24 - 30 am Eingangserweiterungsmodul 4 auch Klemmen 12 - 22 auf, die die Geber mit Strom versorgen können. An einigen dieser Klemmen 12 - 22 liegt im Ausführungsbeispiel stets eine kleine positive Gleichspannung an, dies ist jedoch nicht zwingend, z.B. bei sog. Open-Collector oder Tri-State-Ausgängen. Alternativ können an anderen dieser Klemmen 12 - 22 auch Prüfsignale mit zyklischen, pulsartigen Prüfpulsen zur Leitungs- und Kurzschlussprüfung vorgesehen sein, die jeweils für eine kurze Dauer 0 Volt über der sonst erhaltenen Grundspannung einstellen. Die Prüfpulse können alternativ auch auf einen Trigger wie z.B. eine manuelle oder automatische veranlasste Prüfanfrage hin abgegeben werden. Alle Klemmen 12 - 38 können hardwareseitig beliebig, z.B. als Schraub- oder Federklemmen ausgestaltet sein.

FIG 2 zeigt ein Anwendungsbeispiel der Sicherheitssteuerung 1 im Gutzustand. Dabei wird aus Gründen der Übersichtlichkeit auf die Darstellung sämtlicher Teile der Sicherheitssteuerung 1 verzichtet und es wird nur ein Ausschnitt der Sicherheitssteuerung gezeigt.

FIG 2 zeigt einen Not-Aus-Schalter 48, der zwei redundante Kanäle mit zwei mechanisch verbundenen Schaltern 50, 52 umfasst. Die Schalter 50, 52 sind äquivalent, d.h. beide im Gutzustand geschlossen und im Zustand der Anforderung der Sicherheitsfunktion geöffnet. Hier ist der Not-Aus-Schalter 48 derart mit dem Sicherheitssteuerung 1 verbunden, dass Klemme 16 über den einen der Schalter 50 mit Klemme 26 verbunden ist, Klemme 14 über den anderen der Schalter 52 mit Klemme 24. Auf den Klemmen 24, 26 ergibt sich bei Freigabe somit die Signalkombination Plus, Plus, im Zustand der Anforderung der Sicherheitsfunktion die Signalkombination Null, Null. Andere Signalkombinationen deuten auf einen Fehler hin. In beiden letztgenannten Fällen wird eine Unterbrechung der Stromzufuhr des jeweils durch die noch im Folgenden erläuterte Logikprogrammierung mit dem Not-Aus-Schalter 48 verknüpften Stromkreises im Ausgangserweiterungsmodul 6 veranlasst, beispielsweise zwischen den Klemmen 36 und 38.

Das Beispiel in den FIG 1 und 2 dient nur der Veranschaulichung der Funktionsweise der Sicherheitssteuerung 1 und ist daher stark vereinfacht. In der Realität wird das System weit komplexer sein, d.h. es werden wesentlich mehr Module und Module anderer Art (z.B. sogenannten Gateway-Module für Schnittstellen zu Feldbussen) vorhanden sein, und es werden eine Vielzahl weiterer Klemmen auf verschiedenen Modulen vorhanden sein, die eine Vielzahl von elektrischen Verbrauchern schalten können und an die eine Vielzahl von Gebern und Aktoren verschiedenster Art angeschlossen werden kann. Auch müssen die Klemmen nicht notwendig nur eine Funktion erfüllen sondern können ggf. auch variabel als Ein-oder Ausgangsklemmen verwendet werden.

Die Klemmenbelegung und damit letztlich die an den Klemmen zu erwartenden Signalkombinationen sowie die logische Verknüpfung zwischen den Geber- und Aktorsignalen müssen in der Steuereinheit 10 der Sicherheitssteuerung 1 hinterlegt sein, so dass diese bei entsprechender Signalisierung die Abschaltung der richtigen elektrischen Verbraucher veranlasst. Dies geschieht durch Übergabe einer entsprechenden Konfiguration an eine in der Steuereinheit 10 hinterlegte Firmware. Da die Konfiguration letztlich die gesamten logischen Verknüpfungen zwischen Gebern und Aktoren festlegt, wird sie im Folgenden vereinfachend als Programm bezeichnet.

Die Erstellung dieses Programms erfolgt an einem digitalen Computer 54, der in FIG 3 gezeigt ist. Der Computer 54 weist Eingabegeräte wie eine Tastatur 56 und eine Maus 58 auf sowie einen Bildschirm 60 als Ausgabegerät. Über eine serielle oder parallele Schnittstelle oder z.B. über Ethernet ist er mit der Sicherheitssteuerung 1 verbunden. Auf dem Computer 54 wird durch einen Benutzer auf einer grafischen Programmieroberfläche anhand der angedachten Geber- und Aktorkombination sowie der gewünschten logischen Verknüpfung das Programm erstellt, geprüft und anschließend in die Steuereinheit 10 der Sicherheitssteuerung 1 übertragen. In einer alternativen, nicht gezeigten Ausführungsform kann der digitale Computer 54 auch als Tablet mit Touchscreen ausgestaltet sein. Insofern im Folgenden im Ausführungsbeispiel von Mausklick oder Mausbewegung gesprochen wird, wäre dies im Falle eines Tablets durch Antippen und entsprechendes Ziehen des Fingers durchzuführen.

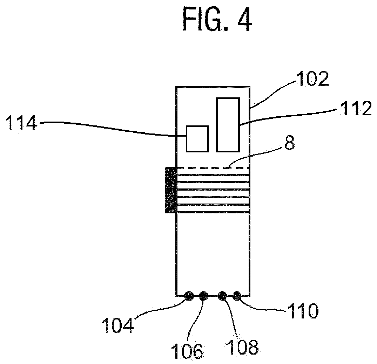

Nicht alle sicherheitsrelevanten Systeme können jedoch mit binären Gebern wie dem in FIG 2 gezeigten Not-Aus-Schalter 48 überprüft werden. Häufig ist eine sichere (d.h. in der Regel auch redundante) Überwachung von Temperaturen, Strömen etc. notwendig. Hierfür müssen häufig separate Systeme vorgesehen werden, was die Komplexität der Überwachung erhöht. Stark vereinfacht wird dies hingegen, wenn die Sicherheitssteuerung 1 selbst analoge Eingangssignale erfassen und verarbeiten kann. Hierfür ist ein Analogmodul 102 vorgesehen, welches in FIG 4 schematisch dargestellt ist und durch Anschluss an den Rückwandbus 8 selbst Teil der in FIG 1 gezeigten Sicherheitssteuerung 1 wird.

Das Analogmodul 102 wird mit den übrigen Modulen 2, 4, 6 über den Rückwandbus 8 datenseitig verbunden. Es weist vier Klemmen 104 - 110 als Signaleingänge für analoge Signale auf. Das heißt, dass die Klemmen 104 - 110 nicht für die Verarbeitung von z.B. +24 V Signalen oder Prüfpulsen ausgelegt sind, sondern vielmehr z.B. Strom- oder Spannungswerte erfassen, die von analogen Sensoren wie Temperatursensoren o.Ä. erzeugt werden.

Im Ausführungsbeispiel soll z.B. eine Temperatur überwacht werden. Hierfür wird an die Klemmen 104 - 110 ein geeigneter Sensor angeschlossen, der Temperaturen messen kann. Hierfür kann z.B. ein Widerstandsthermometer dienen, welches abhängig von der Temperatur einen bestimmten Widerstand annimmt. Dieser erzeugt einen Spannungsabfall an der Klemme 104 - 110. Gemessen wird im Analogmodul 102 somit eine Spannung als Gleitkommawert.

Um diese gemessene Spannung in einen Temperaturwert umzurechnen, sind Gleitkommaoperationen gemäß der den Sensor charakterisierenden Formel nötig. Diese sollen in der Sicherheitssteuerung 1, obwohl nur ein Sensor vorhanden ist und hardwareseitig damit Einkanaligkeit besteht, gemäß IEC 61508 redundant ausgewertet werden.

Hierfür weist das Analogmodul 102 zunächst eine gewöhnliche, prinzipiell für Ganzzahloperationen ausgelegte Prozessoreinheit 112 auf, in der Regel einen Mikroprozessor. In diesen ist eine Software-Bibliothek für Gleitkommaberechnungen geladen. Zur Laufzeit berechnet die Prozessoreinheit 112 mittels der Software-Bibliothek aus dem gemessenen Spannungswert die Temperatur. Dies geschieht anhand der oben erwähnten Formel.

Zusätzlich weist das Analogmodul 102 eine Gleitkomma-Hardwareeinheit 114 auf, d.h. eine FPU. Diese Gleitkomma-Hardwareeinheit 114 führt eine analoge Berechnung, d.h. eine Berechnung anhand der selben Formel, gleichzeitig und parallel zur Berechnung in der Prozessoreinheit 112 durch. Mit den ihr zur Verfügung stehenden hardwareseitigen Mitteln wird somit in der Gleitkomma-Hardwareeinheit 114 ebenso die Temperatur aus dem gemessenen Spannungswert ermittelt.

Somit entstehen parallel zwei berechnete Ergebnisse. Für diese ist eine Genauigkeit vorgegeben, d.h. eine Anzahl Nachkommastellen. Diese Genauigkeit kann anhand der Parameter des überwachten Systems oder anhand der Rechengenauigkeit der verwendeten FPU gewählt werden. Die beiden berechneten Ergebnisse werden anhand dieser Genauigkeit in Integerwerte verwandelt, d.h. das Komma wird um die entsprechende Anzahl Nachkommastellen wie vorgegeben verschoben und die verbleibenden Nachkommastellen werden abgeschnitten.

Die so ermittelten Integerwerte werden dann gemäß IEC 61508 konsolidiert, d.h. verglichen. Weichen die Werte voneinander ab, wird ein Fehler festgestellt und die überwachte Anlage ggf. in den sicheren Zustand gebracht. Diese Fehlererkennung erfüllt dabei die Kriterien der IEC 61508 für diversitäre Redundanz, so dass ggf. auch die systematische Fehler aufgedeckt werden können.

Der Abgleich und die Konsolidierung der Werte erfolgt im Ausführungsbeispiel dabei im Analogmodul 102, das hierfür spezifisch ausgelegt sein kann. In alternativen Ausführungsformen könnten die beiden ermittelten Werte jedoch auch über den Rückwandbus 8 an das Kopfmodul 2 übermittelt und dort konsolidiert werden. Bevorzugt könnte die Konsolidierung dabei über eine Mittelwertbildung erfolgen. Hierzu könnte in Abhängigkeit von der Genauigkeit ein Abweichungsbetrag der einzelnen Werte vom Mittelwert vorgegeben werden. Weichen die einzelnen Werte um einen höheren Betrag als den Abweichungsbetrag vom Mittelwert ab, wird ein Fehler festgestellt.

### Bezugszeichenliste

- 1: Verarbeitungsgerät / modulare Sicherheitssteuerung
- 2: Kopfmodul
- 4: Eingangserweiterungsmodul
- 6: Ausgangserweiterungsmodul
- 8: Rückwandbus
- 10: Steuereinheit
- 12 - 38: Klemme
- 40 - 46: Relais
- 48: Not-Aus-Schalter
- 50, 52: Schalter
- 54: Computer
- 56: Tastatur
- 58: Maus
- 102: Analogmodul
- 108 - 110: Klemme
- 112: Prozessoreinheit
- 114: Gleitkomma-Hardwareeinheit

## Patentansprüche

1. Verfahren zur Durchführung einer Gleitkommaarithmetik während der Laufzeit eines Programms in Echtzeit, bei dem
aus zwei Ausgangsdaten, bei denen es sich um Gleitkommazahlen handelt,
in einer ersten Berechnung ein erstes Ergebnis ermittelt wird,
in einer zweiten, zur ersten Berechnung analogen Berechnung ein zweites Ergebnis ermittelt wird,
wobei das erste und das zweite Ergebnis auf eine Fehlerabweichung überprüft werden,
**dadurch gekennzeichnet, dass**
die erste Berechnung mittels einer Software-Bibliothek für Gleitkommaberechnungen durchgeführt wird, und
die zweite Berechnung mittels einer Gleitkomma-Hardwareeinheit (114) durchgeführt wird.

2. Verfahren nach Anspruch 1, bei dem das erste und das zweite Ergebnis vor der Überprüfung auf eine Fehlerabweichung in Integerwerte umgewandelt werden und die Überprüfung anhand der Integerwerte erfolgt.

3. Verfahren nach Anspruch 2, bei dem ein erwarteter Fehler und/oder eine erforderte Genauigkeit vorgegeben werden und die Umwandlung in Integerwerte anhand des vorgegebenen erwarteten Fehlers und/oder der vorgegebenen erforderten Genauigkeit erfolgt.

4. Verfahren nach einem der vorhergehenden Ansprüche, das innerhalb eines nach IEC 61508 sicheren Verarbeitungsgeräts (1) ausgeführt wird.

5. Verfahren nach Anspruch 4, welches innerhalb eines Verfahrens zur sicheren Bestimmung von Analogsignalen angewendet wird.

6. Verarbeitungsgerät (1), ausgebildet zur Durchführung einer Gleitkommaarithmetik während der Laufzeit eines Programms in Echtzeit, umfassend
eine Prozessoreinheit (112) und
eine Gleitkomma-Hardwareeinheit (114),
wobei das Verarbeitungsgerät (1) dazu ausgebildet ist, aus zwei Ausgangsdaten, bei denen es sich um Gleitkommazahlen handelt,
in einer ersten Berechnung mittels einer Software-Bibliothek für Gleitkommaberechnungen in der Prozessoreinheit (112) ein erstes Ergebnis zu ermitteln,
in einer zweiten, zur ersten Berechnung analogen Berechnung in der Gleitkomma-Hardwareeinheit (114) ein zweites Ergebnis zu ermitteln,
und das erste und das zweite Ergebnis auf eine Fehlerabweichung zu überprüfen.

7. Verarbeitungsgerät (1) nach Anspruch 6, die dazu ausgebildet ist, das erste und das zweite Ergebnis vor der Überprüfung auf eine Fehlerabweichung in Integerwerte umzuwandeln und die Überprüfung anhand der Integerwerte erfolgen zu lassen.

8. Verarbeitungsgerät (1) nach Anspruch 7, die dazu ausgebildet ist, die Umwandlung in Integerwerte anhand eines vorgegebenen erwarteten Fehlers und/oder einer vorgegebenen erforderten Genauigkeit erfolgen zu lassen.

9. Verarbeitungsgerät 81) nach einem der Ansprüche 6 bis 8, das nach IEC 61508 sicher ausgebildet ist.

10. Verarbeitungsgerät (1) nach einem der Ansprüche 6 bis 9, welches eine Eingangsklemme für Analogsignale aufweist.

11. Verarbeitungsgerät (1) nach Anspruch 10, bei dem die Eingangsklemme als Quelle für eine der Ausgangsdaten vorgesehen ist.
